# EUROPÄISCHE PATENTSCHRIFT

(11) **EP 0 714 950 B1**
(45) Veröffentlichungstag und Bekanntmachung des Hinweises auf die Patenterteilung: **30.05.2001**
(21) Anmeldenummer: 95118034.8
(22) Anmeldetag: 16.11.1995
(51) Int. Cl.: C08L 75/08, C08J 5/18, D06N 3/14

(54) **Wasserdichte und atmungsaktive Flächengebilde aus Harzmischungen thermoplastischer Polyurethane**
Waterproof and breathable films from mixtures of thermoplastic polyurethanes
Films étanches perméables aux gaz à partir de mélanges de polyuréthanes thermoplastiques

(30) Priorität: 29.11.1994 DE 4442380
(43) Veröffentlichungstag der Anmeldung: 05.06.1996
(73) Patentinhaber: WOLFF WALSRODE AG, 29655 Walsrode (DE)
(72) Erfinder: Schultze, Dirk, Dr., D-29683 Fallingbostel (DE)
(74) Vertreter: Pettrich, Klaus-Günter, Dr.

(56) Entgegenhaltungen:
- EP-A- 0 111 682
- EP-A- 0 399 272
- EP-A- 0 586 132
- WO-A-89/01346

## Beschreibung

Die Erfindung betrifft Mischungen aus thermoplastischen Polyurethan-Elastomeren, die sich durch Extrusion verarbeiten lassen. Die erfindungsgemäßen Mischungen aus kompatiblen thermoplastischen Polyurethan-Elastomeren mit unterschiedlichen Weichsegment-Komponenten sind durch ein homogenes Mischungsbild in den Hartsegment-Domänen gekennzeichnet. Flächengebilde aus diesen Mischungen verfügen im Vergleich zu Flächengebilden aus den reinen, für diese Blends eingesetzten Ausgangsmaterialien, über einen verbesserten atmungaktiven Charakter. Die Extrusionsverarbeitung ermöglicht die Umsetzung der erfindungsgemäßen Polymer-Mischungen zu atmungsaktiven Flächenmaterialien. Diese besitzen zudem eine verminderte Wasseraufnahme.

Ferner betrifft sie den Einsatz solcher Flächenmaterialien zur wasserdichten Abdeckung von porösen Flächengebilden, besonders von textilen Webwaren und Vliesen. Dies geschieht üblicherweise durch Extrusionsbeschichtung oder durch Kaschierung von Folien aus den erfindungsgemäßen thermoplastischen Polyurethan-Elastomer-Harz-Mischungen auf diese porösen Materialien.

Es ist bereits allgemein bekannt, daß Textilien, textile Webwaren oder ähnliche poröse Flächengebilde durch Ausrüstung mit einer wasserdichten Folie oder Beschichtung gegen das Eindringen bzw. Durchdringen von flüssigen Komponenten undurchlässig ausgestattet werden. Hierfür haben sich thermoplastische Polyurethan-Elastomere (TPU) bereits bewährt. Ihre atmungsaktiven Eigenschaften bedürfen jedoch einer weiteren Verbesserung.

Der Einsatz von mikroporösen Bahnen, beispielsweise beschrieben in der US 4.194.041, stellt in vielen Fällen keine akzptable Lösung dar, da diese Bahnen trotz ihrer hohen Durchlässigkeit gravierende Nachteile besitzen. Diese bestehen neben ihrer mangelnden Elastizität in der geringen mechanischen Stabilität, insbesondere der mangelnden Abriebfestigkeit. Außerdem sind solche Bahnen ohne eine vollständige Änderung des Eigenschaftsbildes thermoplastisch nicht weiterverarbeitbar.

Die TPU zählen zu der Stoffklasse der thermoplastischen Elastomere. Diese umfasst im allgemeinen Copolymere, deren Eigenschaftsbilder sich aus der Verknüpfung der jeweiligen Eigenschaften der einzelnen Komponenten ergeben. Große Bedeutung haben in dieser Stoffklasse die Blockcopolymere erlangt. Eine informative Übersicht über die Stoffklasse gibt Legge in: Rubber Chemistry and Technology 62 (1989) 529-547.

Die thermoplastischen Polyurethane weisen trotz ihres elastischen Charakters sowohl hohe mechanische Festigkeiten als auch eine gute chemische Beständigkeit auf. Die drei Basiskomponenten der thermoplastischen Polyurethane sind Diisocyanate, kurzkettige Diole - auch als Kettenverlängerer bezeichnet - und langkettige Diole. Letztere bilden das Weichsegment der TPU. Diisocyanate und Kettenverlängerer bilden gemeinsam das sogenannte Hartsegment. Für die thermoplastische Verarbeitbarkeit der TPU ist ein möglichst linearer Molekülkettenaufbau nötig, der durch die nahezu ausschließliche Verwendung difunktioneller Verbindungen realisiert werden kann.

Das Hartsegment bestimmt vor allem die Festigkeit des thermoplastischen Polyurethans, wobei hierfür ursächlich die hohen Bindungsenergien der intermolekularen Wasserstoff-Brücken-Bindungen verantwortlich sind, die charakteristisch für die Polyurethane sind. Das Weichsegment trägt den elastischen Anteil zu den Eigenschaften der TPU bei. Die Auswahl des Weichsegments ist für chemische Wechselwirkungen und die chemische Beständigkeit von hoher Bedeutung.

Bei den handelsüblichen thermoplastischen Polyurethanen wird allgemein eine Verknüpfung guter Festigkeitswerte, d.h. Zug- und Weiterreißfestigkeit mit großer Elastizität, also großer Dehnfähigkeit und Kälteflexibilität bei höchstmöglich eingestelltem Rückstellvermögen angestrebt. Einen Überblick über die thermoplastischen Polyurethane geben Goyert und Hespe in: Kunststoffe 68 (1978) 819-825 oder Hepburn (Hrsg.): Polyurethane Elastomers, Applied Science Publishers, Barking (1982), S. 49-80.

Die Morphologie der TPU ist durch eine Mikrophasen-Entmischung gekennzeichnet, d.h. auf molekularer Ebenen liegen neben Hartsegment-Domänen, in denen die verschiedenen Moleküle durch intermolekulare Wasserstoff-Brücken-Bindungen zusammengehalten werden, Weichsegment-Domänen vor, deren spezielle Überstruktur von dem chemischen Aufbau der langkettigen Diole bestimmt wird.

Die derzeit kommerziell erhältlichen TPU unterscheiden sich vor allem in ihrem Weichsegment. Der wichtigste Unterschied liegt in der unterschiedlichen Verknüpfung der Weichsegment Monomere. Man unterscheidet (Poly-)Ether- und (Poly-)Ester-Diole, die für die Weichsegmente Verwendung finden. Allen Weichsegment-Diolen ist eine Glasumwandlungstemperatur unterhalb Raumtemperatur eigen, so daß die Weichsegmente die elastischen Eigenschaften bestimmen.

Für atmungsaktive TPU werden bevorzugt (Poly-)Ether-Diole eingesetzt, die gegenüber den Ester-Diolen einen hydrophileren Charakter besitzen. Solche Anwendungen sind beispielsweise in der DE 3425794 oder der DE 3538597 beschrieben.

Sollen hohe Stofftransportraten für Wasser oder Wasserdampf realisiert werden, sind die langkettigen Diole i.a. durch ein Weichsegment mit hohem C₂-Ether-Anteil bestimmt, d.h. sie bestehen aus Ethylenoxid-Polymerisaten. C₂-Ether-Weichsegmente sind durch ihre hohe Quellung in Gegenwart von Wasser und/oder Wasserdampf gekennzeichnet.

Die Verarbeitung solcher C₂-Ether-TPU ist durch die Weichsegment-bedingte Klebrigkeit sowie die mechanischen Anforderungen an die TPU limitiert, weshalb der Anteil des Weichsegmentes nicht beliebig gesteigert werden kann. Damit einhergehend ist die Überstruktur der Weichsegment-Phase durch eine hohe Kristallisationsneigung gekennzeichnet.

Die Verbesserung des atmungsaktiven Charakter ist allgemein durch eine Erhöhung des Weichsegment-Anteils möglich. Diese Erhöhung stößt jedoch bei Weichsegment-Anteilen von ca. 60 % auf Grenzen. Oberhalb dieser Grenze wird eine thermoplastische Verarbeitung durch das verschlechterte Förderverhalten schwierig bis unmöglich. Außerdem werden Eigenschaften wie Festigkeit und Wasseraufnahme durch den höheren Weichsegment-Anteil stark beeinträchtigt.

Eigenschaftsmodifizierungen lassen sich auch durch Herstellung von TPU unter Verwendung verschiedener langkettiger Diole herstellen. Mischungen langkettiger Diole zur Synthese von TPU im Labormaßstab sind bereits von Chen, Eaton, Chang und Tobolsky in: Journal of Applied Polymer Science, 16 (1972) 2105-2114 beschrieben worden. Jedoch führen solche Mischungen bei der Herstellung durch das Reaktions-Extruder-Herstellungsverfahren und die beinhalteten Misch-Probleme zu ungleichmäßigen Endprodukten. Bei den bekannten Handelsprodukten inbesondere zu Förderschwankungen in dem Aufschmelzextruder, so daß sehr dünne Flächengebilde nicht kontinuierlich bei geforderter Qualität hergestellt werden können.

Die in der DE 40 38 705 beschriebenen reaktiven Polyurethan-Beschichtungssysteme, bei denen die Prepolymere auf Trägermaterialien aufgetragen und auf dem Träger vernetzt werden, weisen den Nachteil auf, daß sie nach dem Filmbildungsprozeß thermoplastisch nicht weiter verformt werden können.

Langkettige Diole aus Copolymerisaten sind zwar bekannt aber vergleichsweise aufwendig herzustellen. Sie bedürfen zudem bei jeder Modifizierung des Eigenschaftsbildes einer individuellen Herstellung und der damit verbundenen Optimierung der Prozessführung. Damit erweisen sie sich für anwendungs- oder kundenbezogene Fertigungen bzw. Einstellungen als zu unflexibel und zu teuer.

Neben reinen TPU-Folien oder -Membranen sind in der Literatur auch verschiedentlich Folien aus Polymer-Mischungen beschrieben, deren eine Komponente TPU ist. Diese betreffen jedoch weder Mischungen verschiedener TPU noch die Verbesserung deren atmungsaktiven Charakters.

Blends oder Mischungen unterschiedlicher Polymere mit TPU sind auch verschiedentlich in der Patentliteratur dargelegt. Unter anderem beschreibt die EP 46071 Mischungen aus TPU mit inkompatiblen Polymeren, die dadurch gekennzeichnet sind, daß in den Mischungen aus Polyurethan und dem inkompatiblen Polymer das letztere eine diskrete Phase innerhalb der kontinuierlichen Polyurethan-Matrix bildet.

Die Coexistenz verschiedener Phasen wird, wie in der EP 526 858 beschrieben, bei der Verbesserung des Trennverhaltens von Polyurethan-Folien ausgenutzt. Dort wird ein härteres, schneller kristallisierendes Material in eine ansonsten weiche Matrix eingebracht und damit ein zusätzlicher Trenneffekt erzeugt.

Die bereits Mikrophasen-entmischte aber durch intermolekulare Wasserstoff-Brücken-Bindungen vergleichsweise feste Matrix wird durch die Ausbildung größerer diskreter Phasen mit geringerer mechanischer Eigenfestigkeit geschwächt. In der EP 526 858 wird ausgeführt, daß die Zumischung von inkompatiblen thermoplastischen Elastomeren zu thermoplastischen Polyurethan-Ether-Elastomeren zu einer Verschlechterung der mechanischen Festigkeit führt.

Als Aufgabe zur Verbessung der aus dem Stand der Technik an sich bekannten atmungsaktiven TPU-Folien für textile Anwendungen im Rahmen der vorliegenden Erfindung ergab sich die Forderung nach einem erhöhten Tragekomfort der Textilien, insbesondere hinsichtlich der Atmungsaktivität, verbunden mit gleichbleibenden Verarbeitungs- und Anwendungseigenschaften.

Die Forderung nach einer verbesserten Atmungsaktivität, allgemein durch eine gesteigerte Wasserdampfdurchlässigkeit verdeutlicht, geht vielfach mit dem Wunsch nach einer verminderten Wasseraufnahme einher. Die verminderte Wasseraufnahme hat für den Anwender, insbesondere bei Verwendung von TPU als Klimamembran in atmungsaktiven aber wasserfesten Kleidungsstücken, den Vorteil einer geringeren Gewichtsbelastung durch die Klimamenbran. Dies bedingt einen erhöhten Tragekomfort.

Zudem ist es von Vorteil, wenn die bei der Herstellung von atmungsaktiven Folien auftretenden Kosten gesenkt werden können, so daß diese einem breiteren Publikum erschwinglich und damit nutzbar gemacht werden können.

Von Vorteil ist es schließlich auch, wenn die Folie transparent oder mindestens transluzent ausgebildet ist, so daß das von der Folie abgedeckte Material durch die Folie hindurch einer Inspektion unterzogen werden kann.

Gelöst wurde diese Aufgabe durch eine Harzmischung der eingangs genannten Gattung, die dadurch gekennzeichnet ist, daß sie sich für die thermoplastische Umformung zu Flächengebilden eignet. Jene sind durch ihren atmungsaktiven Charakter, ihre geringe Quellung in Gegenwart von Wasser sowie ihre Dichtheit gegenüber Wasser charakterisiert.

Für den Fachman war es nicht naheliegend, daß sich die eingesetzten thermoplastischen Polyurethan-Rohstoffe zu derart homogenen Mischungen umsetzen lassen, daß Flächengebilde aus letzteren durch eine Erhöhung ihres atmungsaktiven Charakters gekennzeichnet sind.

Die erfindungsgemäßen TPU/TPU-Mischungen bestehen aus mindestens zwei verschiedenen TPU I. und II., die sich im wesentlichen in ihrem Weichsegment, d.h. dem langkettigen, die elastischen Materialeigenschaften beisteuernden, Diol unterscheiden.

Die für die erfindungsgemäßen Mischungen geeigneten TPU sind dadurch gekennzeichnet, daß sie aus linearen, thermoplastisch verarbeitbaren, segmentierten Polyurethan-Molekülen aufgebaut sind. Diese Polyurethane werden hauptsächlich aus alternierenden Blöcken von Weich- und Hartsegmenten gebildet. Die erfindungsgemäß geeigneten TPU besitzen bevorzugt gewichtsmittlere Molekulargewichte zwischen 50000 und 150000 g/mol.

Die Hartsegmente der TPU I. und II. werden aus Kettenverlängerern A) und Diisocyanaten B) gebildet. Die Weichsegmente des TPU I. werden aus langkettigen Diolen C) und die des TPU II. aus langkettigen Diolen D) gebildet, wobei C) und D) nicht identisch sind. Der Massenanteil von C) in der erfindungsgemäßen TPU-Mischung überwiegt gegenüber dem von D), jeweils bezogen auf die Gesamtmasse der erfindungsgemäßen TPU-Rohstoffmischung. Die für die jeweiligen TPU I. und II. eingesetzten langkettigen Diole unterscheiden sich hierbei von Molekül zu Molekül im wesentlichen durch ihr Molekulargewicht.

Die Bausteine für die Synthese der Hartsegmente können aus den für die Produktion von Folienrohstoffen aus TPU bekannten Diisocyanat- und Diol-Komponenten ausgewählt werden.

Als Kettenverlängerer A) kommen kurzkettige bifunktionelle Stoffe zum Einsatz, deren Molekulargewicht zwischen 18 und 350 g/mol beträgt. Bevorzugt sind dies kurzkettige Diole. Werden Diamine als Kettenverlängerer eingesetzt, so lassen sich die erhaltenen Polyurethan-Harnstoffe i.a. nicht mehr aus der Schmelze verarbeiten, da die Zersetzungstemperatur unterhalb der Verarbeitungstemperatur liegt. Als bevorzugt einzusetzende zweiwertige Alkohole sind dies z.B. Ethylenglycol, 1,2-Propylenglycol, 1,4-Butylenglycol, auch als Tetramethylenglycol bezeichnet, 2,3-Butylenglycol, 1,5-Pentandiol, 1,6 Hexandiol, 1,8-Octandiol, ferner Diethylenglycol, Triethylenglycol, Tetraethylenglycol und höhere Oligoethylenglycole, Dipropylenglycol und höhere Oligopropylenglycole sowie Dibutylenglycol und höhere Oligobutylenglycole mit jeweils einem Molekulargewicht bis 350 g/mol.

Geeignete Diisocyanate B) sind aliphatische, cycloaliphatische, aromatische und/oder teilaromatische sowie heterocyclische Diisocyanate, i.a. beschrieben durch die Formel

OCN-Q-NCO

in der
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15 C-Atomen oder einen teilaromatischen bzw. aromatischen Kohlenwasserstoffrest mit 6 bis 15, vorzugsweise 6 bis 13, C-Atomen,
bedeutet.

Solche Diisocyanate sind beispielsweise 1,4-Tetramethylen-diisocyanat, 1,6-Hexamethylendiisocyanat, Cyclohexan-1,3- und -1,4-diisocyanat sowie beliebige Gemische dieser Isomere, Naphthylen-1,5-diisocyanat, 2,4- und 2,6-Diisocyanatotoluol sowie beliebige Gemische dieser Isomeren, Diphenylmethan-2,4'- und/oder -4,4'-diisocyanat.

Für die Ausbildung des die Weichsegment-Matrix bildenden langkettigen Diols C) werden Polyetherdiole mit einem hydrophilen Charakter bevorzugt. Dies sind bevorzugt Polyether-Diole mit einem hohen Anteil an C₂-Bausteinen zwischen den Ether-Bindungen.

Die für die Ausbildung der Weichsegment-Matrix prädestinierten langkettigen Diole sind insbesondere Polyether-Diole oder Oligoether-Diole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. als Katalysatoren aus einem oder mehreren Alkylenoxiden oder cyclischen Ethern mit bevorzugt 2 bis 4 Kohlenstoffatomen im Alkylenrest und gegebenenfalls einem Startermolekül, welches mindestens zwei reaktive Wasserstoffatome gebunden enthält, hergestellt werden.

Geeignete Verbindungen sind beispielsweise Tetrahydrofuran, 1,3-Propylenoxid, 1,2- und 2,3-Butylenoxid aber auch Styroloxid und im besonderen Maße Ethylenoxid und 1,2-Propylenoxid. Die Alkylenoxide können einzeln, alternierend nacheinander oder als Mischungen bei der ionischen Polymerisation eingesetzt werden. Der Masseanteil an vom Ethylenoxid abgeleiteten Einheiten liegt hierbei bevorzugt über 50 %, bezogen auf die Gesamtmasse des Diols. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls substituierte Alkylamine und Diamine. Als Startermoleküle kommen ferner in Betracht Alkanolamine, wie Ethanolamin, Diethanolamin, N-Methyl- und N-Ethyl-Ethanolamin aber auch N-Methyl- und N-Ethyl-Diethanolamin.

Bevorzugt verwendet werden mehrwertige, insbesondere zweiwertige Alkohole, wie Ethandiol, 1,3- und 1,2-Propandiol, Diethylenglycol, Dipropylenglycol, 1,4-Butandiol und 1,6-Hexandiol.

Diese Polyether-Diole oder Oligoether-Diole C) besitzen vorzugsweise eine Funktionalität von 2 und mittlere Molekulargewichte von 250 bis 8000 g/mol, besonders bevorzugt 600 bis 4000 g/mol. Das mittlere atomare Kohlenstoff/Sauerstoff-Verhältnis liegt bevorzugt zwischen 2 und 3.

Als langkettige Diole D) für die Ausbildung der Weichsegmente des TPU II. der erfindungsgemäßen TPU/TPU-Mischungen lassen sich sowohl Ether- als auch Ester-Polyole einsetzen.

Geeignete Polyester-Diole sind z.B. Umsetzungsprodukte von zweiwertigen niedermolekularen Alkoholen mit zweiwertigen Carbonsäuren, die vorzugsweise Hydroxylendgruppen aufweisen. Anstelle der freien Dicarbonsäuren können auch die entsprechenden Dicarbonsäureanhydride oder Dicarbonsäureester von niedrigen Alkoholen oder deren Gemische zur Herstellung der Polyester verwendet werden. Die Dicarbonsäuren können aliphatischer, cycloaliphatischer, aromatischer und/oder heterocyclischer Natur sein. Bevorzugte Carbonsäuren und deren Derivate sind Bernsteinsäure, Adipinsäure, Korksäure, Azelainsäure, Sebacinsäure, Phthalsäure, Isophthalsäure und Phthalsäureanhydrid. Als niedermolkulare Diole eignen sich die auch als Kettenverlänger beschriebenen Moleküle. Bevorzugt werden hier Ethylenglycol, Butylenglycol-(1,4) und Hexandiol-(1,6) eingesetzt.

Mögliche Ether-Polyole D) werden aus einem oder mehreren Alkylenoxiden oder cyclischen Ethern mit mehr als 2 Kohlenstoffatomen im Alkylenrest und gegebenenfalls einem Startermolekül, welches mindestens zwei reaktive Wasserstoffatome gebunden enthält, nach dem oben beschriebenen Verfahren hergestellt. Mögliche Beispielverbindungen für den Aufbau der Weichsegmente sind oben genannt. Werden für die Harz-Komponente TPU II. der erfindungsgemäßen TPU-Harzmischung Etherpolyole verwendet, so muß das Ether-Polyol gegenüber der Harzkomponente TPU I. in der chemischen Konstitution unterschiedlich sein. Dies wird durch ein für die Komponente TPU II. gegenüber der Komponente TPU I größeres Kohlenstoff/Sauerstoff-Verhältnis charakterisiert.

Die das Weichsegment der Komponente TPU II. bildenden Diole C) besitzen vorzugsweise eine Funktionalität von 2 und mittlere Molekulargewichte von 500 bis 10000 g/mol, besonders bevorzugt 1000 bis 5000 g/mol.

Als Komponente TPU II. lassen sich wiederum Mischungen aus verschiedenen TPU einsetzen, die dadurch gekennzeichnet sind, daß die eingesetzten TPU bei gleicher chemischer Zusammensetzung des Hartsegments verschiedene der unter D) beschriebenen Weichsegmente besitzen.

Ausgangsmaterialien für die erfindungsgemäßen TPU-Mischungen können beispielsweise die unter den Handelsbezeichnungen Desmopan, Elastollan, Estane, Irogran, Morthane, Texin und Tecoflex bekannten Harze sein.

In den erfindungsgemäßen Harzmischungen bildet die Komponente TPU I. die Matrix, TPU II. bildet die Minoritätskomponente. Zur Erzielung des erfindungsgemäßen Eigenschaftsprofils liegt der bevorzugte Massenanteil von TPU I. zwischen 70 und 95 Gew.-%, der von TPU II. zwischen 5 und 30 Gew.-%, jeweils bezogen auf die Gesamtmasse der zur weiteren Verarbeitung eingesetzten TPU-Harzmischung.

Die für die erfindungsgemäßen Harzmischungen eingesetzten TPU I. und II. sollten in ihren Fließeigenschaften keine deutlichen Unterschiede aufweisen. Die Differenz der Schmelzindices der eingesetzten TPU-Harzmassen sollte 20 g/10 min bei einer Bestimmung der Schmelzindices nach DIN 53 735 bei 190°C und einer Prüfbelastung von 10 kg nicht übersteigen.

Es war nicht naheliegend, daß durch Mischen von verschiedenen thermoplastisch verarbeitbaren Polyurethanen die Wasserdampfdurchlässigkeit von Flächengebilden aus diesen Mischungen gegenüber den Einzelkomponenten gesteigert und dabei die Wasseraufnahme herabgesetzt werden konnte.

Neben den geschilderten Eigenschaftsvorteilen bietet das Abmischen der vergleichsweise teuren, hydrophilen TPU mit gewöhnlichen Polyurethanen den Vorteil einer Reduzierung der Kosten des eingesetzten Rohstoffmaterials.

Zur Verbesserung und zum Erhalt der Gebrauchseigenschaften können die erfindungsgemäßen Kunststoff-Harzmischungen mit den für Kunststoffe üblichen Farb-, Funktions- und/oder Stabilisationsadditiven in den für Kunststoffe üblichen wirksamen Konzentrationen ausgerüstet werden. Die Addtive werden vorzugsweise als Masterbatch oder Wirkstoff-Konzentrat zugefügt.

### Beispiele

Im folgenden wird die Erfindung anhand von Beispielen noch näher erläutert. Für diese Beispiele wurden Polyurethan-Harz-Mischungen zu Folien verarbeitet, bei der Herstellung die Verarbeitungseigenschaften protokolliert und an den erhaltenen Folien ausgewählte Eigenschaften überprüft. Dazu wurde für die nachfolgend beschriebenen Rezepturen eine Schmelz-Extrusions-Verarbeitung auf einer Blasfolienanlage ausgewählt.

Sämtliche eingesetzten Granulate wurden in einem handelsüblichen Lufttrockner der Bauart Somos bei 70 °C auf eine Restfeuchte von 0,01 % getrocknet. Der Taupunkt der Trockenluft lag bei -35 °C. Die vorgetrockneten TPU-Harz-Granulate wurden diskontinuierlich in einem Rhönrad-Faßmischer gemischt.

Die nachfolgend beschriebenen TPU wurden zur Herstellung der Beispiel-Folien eingesetzt.

### 1. TPU 1

Hierbei handelte es sich um ein lineares Etherurethan mit einer Shore-Härte von etwa 90 A und einem Schmelzindex, gemessen nach DIN 53 735 bei 190°C und einer Prüfbelastung von 10 kg, von 32 g/10min. Dieses TPU wurde aus den Bausteinen 4,4'-Diphenylmethandiisocyanat, Butandiol als Kettenverlängerer und einem Poly(ethylenoxid)-basierenden Polydiol mit einem Molekulargewicht von etwa 1000 g/mol aufgebaut.

### 2. TPU 2

Dieses TPU war ein lineares Etherurethan mit einer Shore-Härte von etwa 75 A und einem Schmelzindex, gemessen nach DIN 53 735 bei 190°C und einer Prüfbelastung von 10 kg, von 30 g/10min. Das TPU wurde aus den Bausteinen 4,4'-Diphenylmethandiisocyanat, Butandiol als Kettenverlängerer und einem Poly(propylenoxid)-basierenden Polydiol mit einem Molekulargewicht von etwa 1500 g/mol gebildet.

### 3. TPU 3

Dieses lineare Etherurethan mit einer Shore-Härte von etwa 85 A hatte einen Schmelzindex, gemessen nach DIN 53 735 bei 190°C und einer Prüfbelastung von 10 kg, von 17 g/10min. Dieses hier verwendete TPU wurde aus den Bausteinen 4,4'-Diphenylmethandiisocyanat, Butandiol als Kettenverlängerer und einem Poly(oxytetramethylen)diol mit einem Molekulargewicht von etwa 1000 g/mol hergestellt.

### 4. TPU 4

Hier wurde ein lineares Esterurethan mit einer Shore-Härte etwa 88 A und einem Schmelzindex, gemessen nach DIN 53735 bei 190°C und einer Prüfbelastung von 10 kg, von 15 g/10min ausgewählt. Dieses TPU war aus den Bausteinen 4,4'-Diphenylmethandiisocyanat, Butandiol als Kettenverlängerer und einem Poly(butylenadipat)diol mit einem Molekulargewicht von etwa 2000 g/mol zusammengesetzt.

### Beispiel 1

Es wurde eine Harz-Mischung aus 95 Gew.-% TPU 1 und 5 Gew.-% TPU 3 eingesetzt.

### Beispiel 2

Es wurde eine Harz-Mischung aus 90 Gew.-% TPU 1 und 10 Gew.-% TPU 3 eingesetzt.

### Beispiel 3

Es wurde eine Harz-Mischung aus 85 Gew.-% TPU 1 und 15 Gew.-% TPU 3 eingesetzt.

### Beispiel 4

Es wurde eine Harz-Mischung aus 85 Gew.-% TPU 1 und 15 Gew.-% TPU 2 eingesetzt.

### Beispiel 5

Es wurde eine Harz-Mischung aus 95 Gew.-% TPU 1 und 5 Gew.-% TPU 4 eingesetzt.

### Beispiel 6

Es wurde eine Harz-Mischung aus 85 Gew.-% TPU 1 und je 7,5 Gew.-% TPU 2 und TPU 3 eingesetzt.

### Beispiel 7

Es wurde eine Harz-Mischung aus 80 Gew.-% TPU 1 und je 10 Gew.-% TPU 2 und TPU 3 eingesetzt.

### Vergleichsbeispiel 1

Als Harz wurde ausschließlich TPU 1 verwendet.

### Vergleichsbeispiel 2

Als Harz wurde ausschließlich TPU 2 verwendet.

### Vergleichsbeispiel 3

Als Harz wurde ausschließlich TPU 3 verwendet.

### Vergleichsbeispiel 4

Als Harz wurde ausschließlich TPU 4 verwendet.

Die oben angegebenen Zusammensetzungen der eingesetzten TPU-Harze beziehen sich jeweils auf die gesamte eingesetzte Polymer-Harz-Masse. Auf sämtliche Rohstoffmischungen der obigen Beispiele wurden zusätzlich 5 Gew.-% Kieselsäure und 1 Gew.-% eines Amidwachses, jeweils bezogen auf die Gesamtmasse der zur Folienherstellung eingesetzten Rohstoffe, aufgetrommelt.

Die Polyurethan-Mischungen wurden mit einem handelsüblichen Einschnecken-Extruder aufgeschlossen. Dieser hatte einen Innendurchmesser (D) von 45 mm, eine wasserkühlbare genutete Einzugsbuchse und eine Länge von 25 D. Der Extruder wurde mit einer partiell zweigängigen Drei-Zonen-Schnecke (Barriereschnecke) betrieben, die zusätzlich mit je einem dispersiven und einem distributiven Mischteil ausgestattet war. An die Metering-Zone schloß sich zunächst das dispersive Mischteil der Bauart Maddock, oft auch als Scherteil bezeichnet, mit einer Länge von 3 D an. Zum distributiven Mischen wurde ein dynamisches Mischteil mit rautenförmigen Schlitzscheiben in ebenfalls 3 D Länge eingesetzt. Die Wirkungsweise dieses Schneckenaufbaus ist beispielsweise von der Fa. Davis-Standard in folgender Literaturstelle beschrieben: Paper, Film & Foil Converter, Ausgabe 6 (1990) 84-90. Die Schmelze wurde durch ein Siebpaket geleitet, dessen feinstes Sieb eine Maschendichte von 900 Maschen pro cm² aufwies. Die Temperaturprofil am Extruder stieg von 160°C an der Einzugsbuchse bis auf 200°C im Bereich der Mischteile an.

Als Folienwerkzeug wurde ein Einschichtwerkzeug in Spiraldornhalter-Konstruktion mit einem Düsenring-Durchmesser von 130 mm und einem Düsenspalt von 0,8 mm verwendet. Das Folienwerkzeug wurde auf 200°C geheizt.

Die bis auf 235 mm Durchmesser aufgeweitete Schlauchfolien-Blase wurde über einen Kühlring mit einem Durchmesser von 175 mm mit Kühlluft angeblasen. Sie wurde mittels einer Luftpolster-Flachlegung zusammengelegt und durch ein Presseurwerk mit polierter Edelstahlwalze und gummierter Gegendruckwalze abgequetscht. Die Randstreifen der erhaltenen Folie wurden mit stehenden Klingen abgeschnitten, die beiden Folienbahnen getrennt und auf einem Tandemwickler aufgewickelt.

**Tabelle 1**

| Extrusionsparameter Drehzahl, Stromaufnahme, Massedruck und Massetemperatur für die im Rahmen der Beispiele und Vergleichsbeispiele verarbeiteten Polyurethan-Mischungen | | | | |
|---|---|---|---|---|
| **Tabelle 1** | Drehzahl | Stromaufnahme | Massedruck | Massetemperatur |
| | | | | |

| Einheit | /UPM | /A | / bar | /°C |
|---|---|---|---|---|
| | | | | |
| Beispiel 1 | 30 | 16 | 370 | 206 |
| Beispiel 2 | 31 | 18 | 360 | 204 |
| Beispiel 3 | 30 | 18 | 380 | 204 |
| Beispiel 4 | 30 | 19 | 375 | 203 |
| Beispiel 5 | 31 | 16 | 375 | 205 |
| Beispiel 6 | 31 | 14 | 370 | 204 |
| Beispiel 7 | 30 | 16 | 390 | 203 |
| | | | | |
| Vergleichsbeispiel 1 | 30 | 16 | 320 | 208 |
| Vergleichsbeispiel 2 | 30 | 26 | 285 | 210 |
| Vergleichsbeispiel 3 | 29 | 12 | 300 | 202 |
| Vergleichsbeispiel 4 | 28 | 19 | 420 | 209 |

Die unter den beschriebenen Bedingungen erhaltenen transluzenten Folienmuster wurden hinsichtlich der für eine verbesserte Atmungsaktivität wichtigen Größen geprüft. Folgende Prüfungen wurden durchgeführt:

### Bestimmung der Schichtdicke

Die Schichtdicke wurde nach DIN 53 370 durch mechanische Abtastung ermittelt.

### Bestimmung der Wasseraufnahme

Die Wasseraufnahme nach Lagerung über 24 h in entionisiertem Wasser bei 23°C wurde nach DIN 53 495, Verfahren C, gemessen.

### Bestimmung der Wasserdampfdurchlässigkeit

Die Wasserdampfdurchlässigkeit wurde gemäß DIN 53 122 bestimmt. Die Messung erfolgte bei einer Temperatur von 23°C und einer relativen Luftfeuchtigkeit von 85 %.
Die Normierung auf eine Einheitsschichtdicke von 30 um erfolgte durch Multiplikation mit der gemessenen Schichtdicke und Division durch die Einheitsschichtdicke.

### Bestimmung von Reißfestigkeit und -dehnung

Die Reißfestigkeit und -dehnung wurden nach DIN 53 455 ermittelt. Hierbei wurden Prüfstreifen mit einer Einspannlänge von 100 mm verwendet. Die Proben wurden im 90° Winkel zur Abzugsrichtung aus der Folienbahn entnommen.

Tabelle 2 zeigt eine vergleichende Übersicht über die Eigenschaften der aus den erfindungsgemäßen Rohstoff-Mischungen hergestellten Folien.

**Tabelle 2**

| Eigenschaftsübersicht über die im Rahmen der Beispiele und Vergleichsbeispiele hergestellten Flächengebilde | | | | | | |
|---|---|---|---|---|---|---|
| **Tabelle 2** | Wasseraufnahme | Dicke | Wasserdampfdurchlässigkeit (WDDu) | WDDu, normiert auf 30 µm Foliendicke | Reißfestigkeit | Reißdehnung |
| | | | | | | |

| Einheit | / % | / µm | / gm⁻²24h⁻¹ | / gm⁻²24h⁻¹ | / N mm⁻² | / % |
|---|---|---|---|---|---|---|
| | | | | | | |
| Beispiel 1 | 24,1 | 30 | 595 | 595 | 34,8 | 644 |
| Beispiel 2 | 22,9 | 28 | 659 | 615 | 35,1 | 719 |
| Beispiel 3 | 20,5 | 31 | 571 | 590 | 29,8 | 647 |
| Beispiel 4 | 21,7 | 29 | 616 | 595 | 38,5 | 608 |
| Beispiel 5 | 22,0 | 32 | 548 | 585 | 37,6 | 722 |
| Beispiel 6 | 20,6 | 29 | 672 | 650 | 35,3 | 650 |
| Beispiel 7 | 20,4 | 28 | 675 | 630 | 41,2 | 678 |
| | | | | | | |
| Vergleichsbeispiel 1 | 28,2 | 32 | 544 | 580 | 35,0 | 678 |
| Vergleichsbeispiel 2 | 4,8 | 30 | 514 | 514 | 36,4 | 843 |
| Vergleichsbeispiel 3 | 2,9 | 31 | 445 | 460 | 27,9 | 631 |
| Vergleichsbeispiel 4 | 1,1 | 28 | 332 | 310 | 64,1 | 540 |

### Wertung der erfindungsgemäßen Flächengebilde aus TPU-Rohstoffmischungen

Aus Tabelle 1 läßt sich ersehen, daß die in den Beispielen aufgeführten erfindungsgemäßen Ausgangsmaterialien den in den Vergleichbeispielen eingesetzten Rohstoffen hinsichtlich der Eigenschaften des Endproduktes überlegen sind.

Gegenüber dem durch das Vergleichsbeispiel 1 repräsentierten Stand der Technik der für atmungsaktive Bahnmaterialien geeigneten TPU-Harz-Massen ergibt sich beispielsweise eine Verbesserung der Eigenschaften in den zwei für eine Erhöhung der Anwendungseigenschaften wie z.B. des Tragekomforts atmungsaktiver Textilien wesentlichen Punkten Wasserdampfdurchlässigkeit und Wasseraufnahme.

Polyethylenoxid ist für seine hohe Kristallisationsneigung bekannt, so daß es auch als Weichsegment noch kristallisieren kann. Kristalline Bereiche von Polymeren gelten im allgemeinen als impermeabel, da in ihnen keine Platzwechselvorgänge möglich sind, so daß sie den Stofftransport behindern. Eine Verringerung des kristallinen Anteils bringt Vorteile. Das für den atmungsaktiven Charakter bedeutsamste Stofftransportphänomen ist die Wasserdampfdurchlässigkeit.

Ohne eine deutliche Steigerung des Anteils der Weichsegment-Phase konnte die Wasserdampfdurchlässigkeit gegenüber den Vergleichsfolien gesteigert werden. Dieses Phänomen kann nur auftreten, wenn die Durchmischung der eingesetzten TPU-Harze in ausreichendem Maße erfolgt, so daß die verschiedenen Weichsegmente sich auf molekularer Ebene mischen, da andernfalls eine Verringerung der WDDu in dem Maße eintritt, wie permeabler Volumenanteil durch geringerpermeable Harze aufgefüllt wird.

Die geringe Änderung der Reißfestigkeit unterstreicht die Kompatibilität der eingesetzten Rohstoffe. Die durch den homogenen Mischungscharakter unverändert hohe Reißfestigkeit kommt durch die hohen Bindungsenergien der intermolekularen Wasserstoffbrückenbindungen der Hartsegmente zustande.

Die erhöhte Wasserdampfdurchlässigkeit ermöglicht einen verbesserten Transport beispielsweise durch Transpiration freigesetzter Feuchte. Die verminderte Wasseraufnahme bewirkt dabei, daß die Gewichtszunahme des Textils durch sorbierte Feuchtigkeit geringer ausfällt und durch das geringere Gewicht dem Träger des Textils angenehmere Trageeigenschaften bietet.

## Patentansprüche

1. Dichte atmungsaktive Flächengebilde aus Polymerharzmischungen aus mindestens zwei verschiedenen thermoplastisch verarbeitbaren Polyurethanen, dadurch gekennzeichnet, daß die verschiedenen thermoplastischen Polyurethane Weichsegmente mit unterschiedlicher chemischer Konstitution aufweisen, wobei das thermoplastische Polyurethan, welches die Matrix bildet, ein Polyurethan mit einem Ether-basierenden Weichsegment ist, wobei das Ethersegment ein atomares Kohlenstoff/Sauerstoff-Verhältnis von mindestens zwei und höchstens drei besitzt und das die Matrix bildende Polyurethan einen Anteil von 70-95 Gew.-%, bezogen auf die Gesamtmasse der für die thermoplastische Verarbeitung zu einem Flächengebilde eingesetzten thermoplastischen Polymerharzmischung besitzt und daß die Flächengebilde aus der Schmelze der Polymerharzmischungen hergestellt werden und die Flächengebilde eine höhere Wasserdampfdurchlässigkeit, bestimmt nach DIN 53 122, und eine geringere Wasseraufnahme, bestimmt nach DIN 53 495, Verfahren C, als Flächengebilde aus nur einem der für die Polymerharzmischung eingesetzten Polyurethane besitzen.

2. Flächengebilde nach Anspruch 1, dadurch gekennzeichnet, daß die Polymerharzmischung zusätzlich zu den thermoplastischen Polyurethanen einen Anteil bis zu 8 Gew.-% an anorganischen Additiven mit Abstandshalter-Wirkung und einen Anteil von mindestens 0,3 Gew.-% und maximal 1 Gew.-% an Wachsen enthält, jeweils bezogen auf die Gesamtmasse der für die thermoplastische Verarbeitung zu Flächengebilden eingesetzten Rohstoffe.

3. Flächengebilde nach einem der Ansprüche 1 oder 2, dadurch gekennzeichnet, daß verschiedene thermoplastische Polyurethane mit mindestens drei unterschiedlichen Weichsegmenten Eingang in die Harzmischung finden, wobei neben dem die Matrix bildenden thermoplastischen Ether-Polyurethan mit einem atomaren Kohlenstoff/Sauerstoff-Verhältnis von mindestens zwei und unter drei mindestens ein weiteres Ether-Polyurethan mit einem atomaren Kohlenstoff/Sauerstoff-Verhältnis von mindestens drei Verwendung findet.

4. Flächengebilde nach einem der Ansprüche 1 bis 3, dadurch gekennzeichnet, daß das erfindungsgemäße Flächengebilde eine bevorzugte Dicke zwischen 10 µm und 100 µm und in einer besonders bevorzugten Ausführung zwischen 15 µm und 30µm aufweist.

5. Flächengebilde nach einem der Ansprüche 1 bis 4, dadurch gekennzeichnet, daß es sich um eine Folie handelt, die durch Blasfolien- oder Breitschlitzextrusion hergestellt wurde.

6. Verwendung eines Flächengebildes nach einem der Ansprüche 1 bis 5, dadurch gekennzeichnet, daß das Flächengebilde als Membran mit selektiver Sperrwirkung gegenüber flüssigen und/oder festen Medien bei gleichzeitig hoher Durchlässigkeit gegenüber Wasserdampf und anderen Gasen.

7. Verwendung gemäß Anspruch 6, dadurch gekennzeichnet, daß die erfindungsgemäßen Flächengebilde als atmungsaktive Abdeckung für poröse Bahnmaterialien aus Webwaren und/oder Vliesen eingesetzt werden.

8. Verwendung gemäß Anspruch 6 dadurch gekennzeichnet, daß die erfindungsgemäßen Flächengebilde zur Herstellung atmungsaktiver Textilien Verwendung finden.

9. Verwendung gemäß den Ansprüchen 6 und/oder 9, dadurch gekennzeichnet, daß sie zum Abdichten von Matratzen und/oder Kissen und/oder Decken gegen Milben, Bakterien und sonstige Mikroorganismen und/oder deren Stoffwechselprodukte eingesetzt werden.

10. Verwendung von Folien gemäß den Ansprüchen 5 und/oder 6, dadurch gekennzeichnet, daß die erfindungsgemäßen Folien zur Abdichtung bei der Formgebung mit Reaktiv-Schaumsystemen eingesetzt werden.

## Claims

1. Waterproof but breathable flat materials prepared from polymer resin mixtures consisting of at least two different melt processable polyurethanes, characterized in that the various thermoplastic polyurethanes have soft segments with different chemical constitutions, wherein the thermoplastic polyurethane which forms the matrix is a polyurethane with a soft segment prepared from ethers, wherein the ether segment has a carbon/oxygen atomic ratio of at least two and at most three and the polyurethane which forms the matrix is present in an amount of 70-95 wt. % with reference to the total weight of the thermoplastic polymer resin mixture used for melt processing to produce a flat material, and in that the flat materials are produced from the melt of the polymer resin mixtures, and the flat materials have a higher permeability to water vapour, determined according to DIN 53 122, and a lower water absorption, determined according to DIN 53 495, method C, than flat materials made from only one of the polyurethanes used for the polymer resin mixture.

2. Flat materials according to Claim 1, characterized in that the polymer resin mixture contains, in addition to thermoplastic polyurethanes, a proportion of up to 8 wt. % of inorganic additives with a space-maintaining effect and a proportion of at least 0.3 wt. % and at most 1 wt. % of waxes, each being with reference to the total weight of raw materials used for melt processing to produce flat materials.

3. Flat materials according to either of Claims 1 and 2, characterized in that the resin mixture contains sufficient different thermoplastic polyurethanes to introduce at least three different soft segments into the resin mixture, wherein in addition to the thermoplastic ether polyurethane which forms the matrix and has a carbon/oxygen atomic ratio of at least two and less than three, at least one further ether polyurethane having a carbon/oxygen atomic ratio of at least three is used.

4. Flat materials according to any of Claims 1 to 3, characterized in that the flat materials according to the invention have a preferred thickness of between 10 µm and 100 µm, and in a particularly preferred version, of between 15 µm and 30 µm.

5. Flat materials according to any of Claims 1 to 4, characterized in that the flat materials have been produced by tubular film or flat film extrusion.

6. Use of flat materials according to any of Claims 1 to 5, characterized in that the flat materials are in the form of a membrane having a selective barrier effect towards liquid and/or solids while at the same time having a high permeability for water vapor and other gases.

7. Use according to Claim 6, characterized in that the flat materials according to the invention are used as a breathable covering for porous sheet materials comprising wovens and/or nonwovens.

8. Use according to Claim 6, characterized in that the flat materials according to the invention are used for producing breathable textiles.

9. Use according to Claims 6 and/or 9, characterized in that they are used for sealing mattresses and/or cushions and/or cloths against mites, bacteria and other microorganisms and/or their metabolic products.

10. Use of films according to Claims 5 and/or 6, characterized in that the films according to the invention are used for sealing materials during shaping procedures with reactive foam systems.

## Revendications

1. Structures planes étanches, perméables aux gaz, constituées de mélanges de résines polymères d'au moins deux polyuréthannes thermoplastiques différents, caractérisées en ce que les différents polyuréthannes thermoplastiques présentent des segments mous de constitution chimique différente, où le polyuréthanne thermoplastique qui forme la matrice, est un polyuréthanne avec un segment mou à base d'éther, où le segment éther possède un rapport atomique carbone/oxygène d'au moins deux et au maximum trois et le polyuréthanne formant la matrice présente une quantité allant de 70 à 95% en poids, sur base de la masse totale du mélange de résine polymère thermoplastique mis en oeuvre pour le traitement thermoplastique donnant lieu à une structure plane, et en ce que les structures planes sont préparées à partir de la masse fondue du mélange de résines polymères et les structures planes possèdent une perméabilité à la vapeur d'eau plus élevée, déterminée selon DIN 53 122, et une plus faible absorption d'eau, déterminée selon DIN 53 495, procédé C, que les structures planes formées à partir d'un seul des polyuréthannes mis en oeuvre pour le mélange de résines polymères.

2. Structure plane suivant la revendication 1, caractérisée en ce que le mélange de résines polymères contient en plus des polyuréthannes thermoplastiques, une part allant jusqu'à 8% en poids d'additif inorganique ayant activité de maintien à distance et une part d'au moins 0,3% en poids et d'au plus 1% en poids de cire, chaque fois sur base de la masse totale des matières premières mises en oeuvre pour le traitement thermoplastique formant une structure plane.

3. Structure plane suivant la revendication 1 ou 2, caractérisée en ce que divers polyuréthannes thermoplastiques avec au moins trois segments mous différents trouvent leur application dans le mélange de résines, un autre éther-polyuréthanne avec un rapport atomique carbone/oxygène d'au moins trois étant mis en oeuvre en plus de l'éther-polyuréthanne thermoplastique qui forme la matrice et a un rapport atomique carbone/oxygène d'au moins deux et inférieur à trois.

4. Structure plane suivant l'une quelconque des revendications 1 à 3, caractérisée en ce que la structure plane suivant l'invention présente une épaisseur préférée allant de 10 µm à 100 µm et dans une forme de réalisation particulièrement préférée, de 15 µm à 30 µm.

5. Structure plane suivant l'une quelconque des revendications 1 à 4, caractérisée en ce qu'il s'agit d'une feuille qui est préparée par extrusion par soufflage ou par filière plate.

6. Utilisation d'une structure plane suivant l'une quelconque des revendications 1 à 5, caractérisée en ce que la structure plane est mise en oeuvre en tant que membrane avec activité de barrière sélective vis-à-vis de milieux liquides et/ou solides tout en présentant une perméabilité élevée vis-à-vis de la vapeur d'eau et autres gaz.

7. Utilisation suivant la revendication 6, caractérisée en ce que la structure plane suivant l'invention est mise en oeuvre comme revêtement perméable aux gaz pour des matériaux en bande ou nappe poreux sous forme de tissus et/ou de non tissés.

8. Utilisation suivant la revendication 6, caractérisée en ce que la structure plane suivant l'invention est mise en oeuvre dans la préparation de textiles perméables aux gaz.

9. Utilisation suivant la revendication 6 et/ou 8, caractérisée en ce que les structures planes sont mises en oeuvre pour le revêtement de matelas et/ou oreillers et/ou couvertures contre les acariens, bactéries et autres microorganismes et/ou leurs produits de métabolisme.

10. Utilisation de feuilles suivant la revendication 5 et/ou 6, caractérisée en ce que les feuilles suivant l'invention sont mises en oeuvre pour l'étanchement ou le colmatage lors du formage avec des systèmes à mousse réactive.
